# EUROPEAN PATENT APPLICATION

(11) **EP 3 537 266 A1**
(43) Date of publication of application: **11.09.2019**
(21) Application number: 18198741.3
(22) Date of filing: 04.10.2018
(51) Int. Cl.: G06F 3/039, G06F 3/044

(54) **TRANSPARENT BUTTON FOR CAPACITIVE TOUCH SCREEN**

(30) Priority: 05.03.2018 EP 18159984; 30.08.2018 EP 18191863
(71) Applicant: Advanced Silicon SA, 1007 Lausanne (CH)
(72) Inventor: Ballan, Hussein, 1806 St-Légier (CH); Maréchal, Sylvain, 1008 Prilly (CH); Pastre, Marc, 1024 Ecublens (CH)
(74) Representative: P&TS SA (AG, Ltd.)

(57) **Abstract**

Button (100) configured to be placed on a touch sensor surface, comprising:
- a support member (20) comprising a support surface (30) configured to face the touch sensor surface, comprising a click detection portion (32),
- an activation member (10) movable relative to the support member (20), comprising a user contact surface (12, 14) at least partially transparent,
- a transparent conductive layer (18) capacitively connected to the user contact surface (12, 14), and
- switch means (40) which
- allow an electrically conductive connection of the transparent conductive layer (18) with the click detection portion (32), when the button is in the clicked state,
- provide an haptic and/or an acoustic feedback, when the button (100) changes from the unclicked to the clicked state and/or vice-versa.

The button allows a good detection quality, a good transparency level and a haptic and/or acoustic feedback.

## Description

### Field of the invention

The present invention concerns a transparent button for a capacitive touch screen, in particular a mechanical transparent button, preferably a passive mechanical transparent button.

### Description of related art

It is known in the field of slot machines button decks to use touch sensors (or touch screens), in particular capacitive touch sensors, with mechanical or electro-mechanical buttons on the touch sensor surface. The buttons are configured to display information on the button itself.

In a first solution, a recess is provided in the touch sensor surface, outside the main LCD active surface, for providing the button activation mechanism under the button. A separate LCD display is provided in the button to display the button information. However, this solution is complex.

A second solution would be to glue a transparent button on the (capacitive) touch sensor, whose activation is detected by the touch sensor and which displays the picture of the touch sensor surface below the button. However, this solution has several disadvantages. The height of the total stack from the surface of the LCD, through the touch sensor surface and the button provides a parallax with unacceptable distortion of the information displayed under the button. The passive detection of the activation of the button is error-prone. Since the button in the field of gaming must work with a high precision and must support high stress, the second solution is not much used yet.

In the state of the art, it is known a click mechanism for a button, which moves a click detection portion closer to the touch sensor surface, when the click mechanism is activated. This mechanism has however the disadvantage that movable click detection portion is sometimes not brought close enough to the touch sensor surface such that the click is sometimes not correctly detected.

An alternative is to avoid the mechanical click mechanism and to detect a click only, when a finger touch a defined user contact surface on the button. The user contact surface is conductively connected to the click detection portion such that a capacitive change is detected in the touch pixel under the click detection portion, when the finger touches the user contact surface. This might provide a more reliable detection of the click. However, this has the disadvantage that the user is not able to haptically feel and/or to hear the click, due to the missing click mechanism.

Therefore, there is a need in the state of the art, to provide a (mechanical) button for capacitive touch screen, which provides a display of information at high quality on the button, which can be detected with a high reliability and which allows to the user to haptically feel and/or to hear the click once the button is activated (i.e. once the button is pressed).

There is a need in the state of the art, to provide a (mechanical) button for capacitive touch screen which improves the user feedback and increases the detection quality of the click.

### Brief summary of the invention

It is an object of the present invention to provide a (mechanical) button for capacitive touch screen, which provides a display of information at high quality on the button, which can be detected with a high reliability and which allows to the user to haptically feel and/or to hear the click once the button is activated or clicked.

It is an object of the present invention to provide a (mechanical) button for capacitive touch screen which improves the user feedback and increases the detection quality of the click.

Those objects are achieved by the button according to claim 1.

The dependent claims refer to further advantageous embodiments.

### Brief description of the drawings

The invention will be better understood with the aid of the description of an embodiment given by way of example and illustrated by the figures, in which:
Fig. 1 shows a three-dimensional view of a first embodiment of the button according to the invention.
Fig. 2 shows a bottom view of the first embodiment of the button according to the invention.
Fig. 3 shows a top view of the first embodiment of the button according to the invention.
Fig. 4 shows a cross-sectional view of the first embodiment of the button according to the invention along the line II-II of Fig. 2.
Fig. 5 shows a three-dimensional cross-sectional view of the first embodiment of the button according to the invention along the line III-III of Fig. 2.
Fig. 6 shows a cross-sectional view of the first embodiment of the button according to the invention along the line IV-IV of Fig. 4.
Fig. 7 shows a schematic view of the touch detection mechanism of the capacitive touch sensor of an embodiment of the system according to the invention.
Fig. 8 shows the capacitive circuit of a touch pixel of the capacitive touch sensor of the system according to the invention.
Fig. 9 shows the capacitive circuit of the touch pixel of a capacitive touch sensor, when a human finger touches the touch pixel.
Fig. 10 shows the capacitive circuit of the touch pixel of the capacitive touch sensor of the system according to the invention, when the button is in an unclicked state.
Fig. 11 shows the capacitive circuit of the touch pixel of the capacitive touch sensor of the system according to the invention, when the button is in a clicked state.
Fig. 12 shows a cut view of an embodiment of switch means of one embodiment of the button according to the invention.
Fig. 13 shows a top view of one embodiment of the system according to the invention.

### Detailed description of possible embodiment(s) of the invention

The document having the application number EP180159984 filed by the applicant, the content of which is herein integrated by reference, describes a transparent button for capacitive touch screen, devoid of a switch means according to the invention.

The document having the application number EP180191863 filed by the applicant, the content of which is herein integrated by reference, describes a clickable knob for capacitive touch screen, which is not transparent.

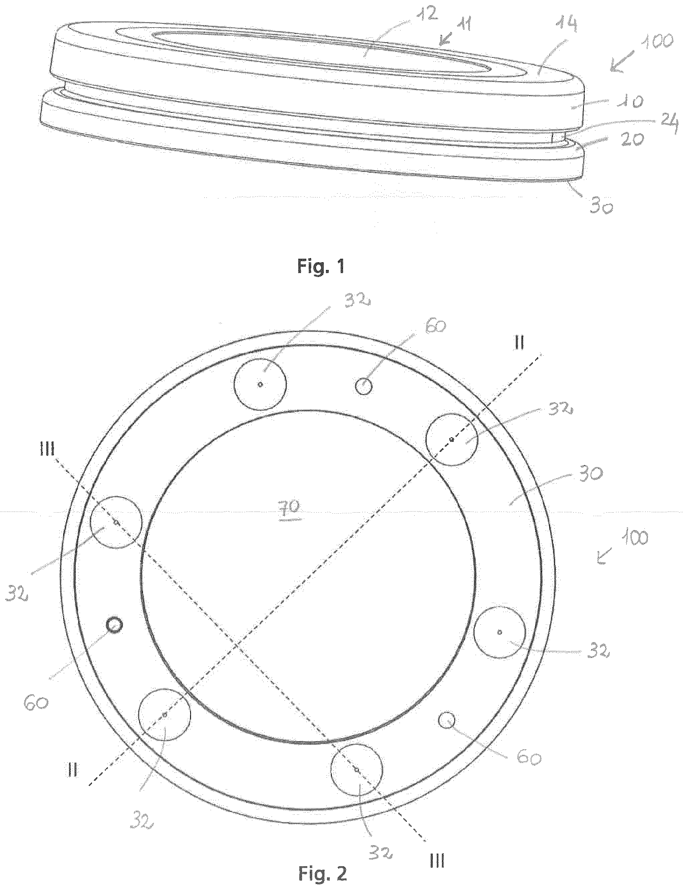

Figs. 1 to 6 show a first embodiment of a button 100 according to the invention. The button is preferably a mechanical button. The button is preferably passive, i.e. it does not emit any signal.

A button 100 according to the invention is a clickable button. In other words, it can be mechanically activated to perform a click input. A click input is a selection or confirmation input by a user similar to a mouse click. Thus, the clickable button 100 can have an unclicked state or a clicked state. The button 100 is normally in an unclicked state and can be pressed by the user in a clicked state.

The button 100 according to the invention cannot be rotated around a rotation axis in order to input a rotational state. Therefore, the button 100 according to the invention is not a knob.

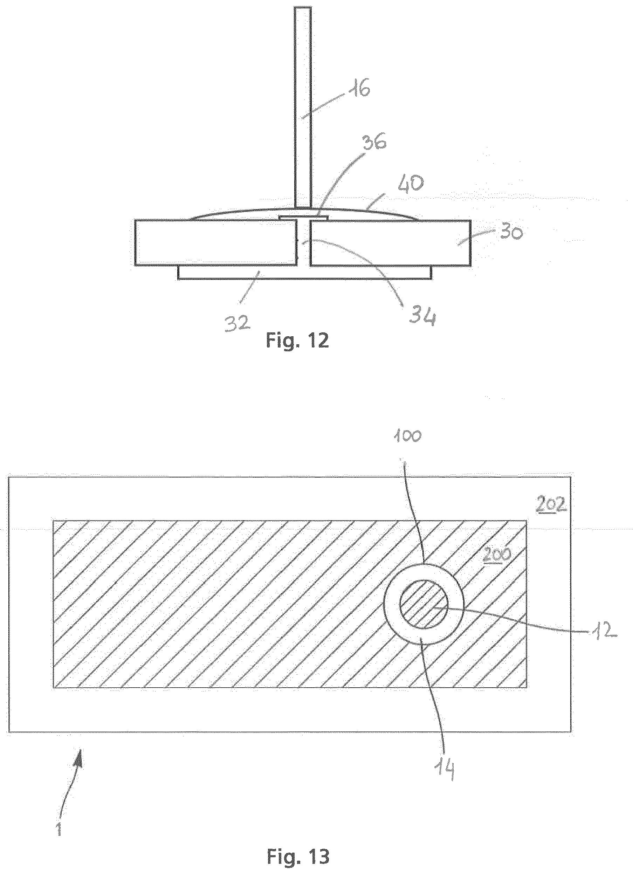

The button 100 is configured to be placed on a touch sensor surface 200 of a capacitive touch sensor 202, visible e.g. on Fig. 13, and configured to allow the capacitive touch sensor 202 to detect a clicked state and an unclicked state.

The button 100 in Figs. 1 to 6 is shown in the unclicked state.

The button 100 in Figs. 1 to 6 has a cut-section sensibly circular. However, this shape is not essential for the invention, and the button can have other cut-sections (squared, rectangular, oval, etc.) or in general other shapes.

In the illustrated embodiment, the button 100 is larger than thick. In other words, it is substantially thin or very thin, so that there is only a small parallax for the display the image or in general the information under the button. This avoids the use of a complex light pipe or of an additional display in the button. Preferably, the button 100 (in the unclicked state) has a height or thickness smaller than 15 mm, preferably smaller than 12 mm, preferably equal to 10 mm. Preferably, the button 100 has a diameter (of a main dimension) smaller than 100 mm, preferably smaller than 80 mm, preferably equal to 65 mm.

In an embodiment, the ratio of the diameter (or main dimension) of the button 100 over its thickness is in the range between 3 and 10.

However, the button 100 can have other aspect ratio. In fact, in one preferred embodiment, it comprises a lens for magnifying the size of the information displayed on the touch sensor surface, this lens being preferably a convex lens. The presence of this lens allows to change the size of the button, e.g. to raise its thickness and/or low its diameter (or main dimension). Preferably, the lens projects outwardly to the user side.

The button 100 according to the invention comprises a support member 20 comprising a support surface 30 configured to face the touch sensor surface 200.

According to the invention, the support surface comprises a click detection portion (or point) 32 allowing the detection of the clicked state of the button in the touch sensor 200.

In the example illustrated in Figs. 1 to 6, the button 100 comprises six click detection portions 32. However, one click detection portion is sufficient for carrying out the invention.

The click detection portions 32 are preferably made out of a conductive material. Here the detection portions are supported in the support surface (or bottom surface) of the button 100. However, it is also possible that the detection portions 32 are just coated on the support surface.

The support surface of the button 100 around the detection portions 32 is preferably made by an electrically insulating material, i.e. a non-conductive material, and/or any other material which is not detected by the capacitive touch pixels.

The detection portions 32 have in the support surface preferably a detection portion diameter. The detection portion diameter is preferably larger than 3 mm, preferably than 4 mm, preferably than 5 mm, preferably than 6 mm. The detection portion diameter is preferably smaller than 10 mm, preferably than 9 mm, preferably than 8 mm.

The detection portions 32 have in the support surface preferably a circular form. The detection portions 32 have preferably the same form and/or the same size. The detection portions 32 can be for example realized as electrically conductive cylinders integrated in the support member 20. The detection portions 32 could by fixed adhesively, by press-fitting or by other methods in corresponding recesses of the body of the support member 20.

The detection portions 32 have preferably a flat bottom surface (i.e. the surface supposed to enter into contact with the capacitive touch sensor). The plane of the bottom surface of the detection portions 32 corresponds substantially to the plane of the support surface of the support member 20. In another embodiment, the bottom surface of the detection portions stands out a little bit from the support surface of the support member 20. This allows that the bottom surfaces of the detection portions 32 are always in contact with the touch sensor surface of the touch sensor (when the button 100 is placed or mounted on the touch sensor surface). Preferably, if the button 100 comprises more than two detection portions 32, they are arranged on a (common) circle around the main axis of the button 100, and preferably equally distributed over the circle.

In a preferred embodiment, illustrated in Figs. 1 to 6, the support member 20 comprises a PCB 30 which comprises the click detection portion 32. In other words, the click detection portion 32 are the pads of a PCB 30 connected, e.g. by gluing or any other suitable means, to the support member 20.

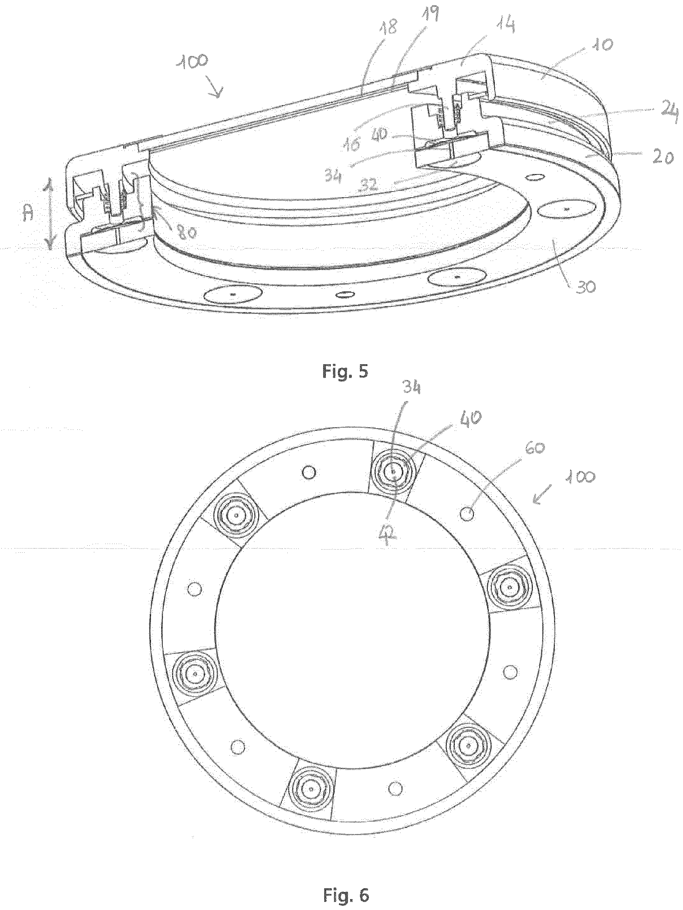

Fixation means 60, visible e.g. on Figs. 2 and 6, allow to connect the PCB 30 to the button 100. In one preferred embodiment, they allow also a precise positioning of the PCB 30 with regard to the button 100, as will be discussed.

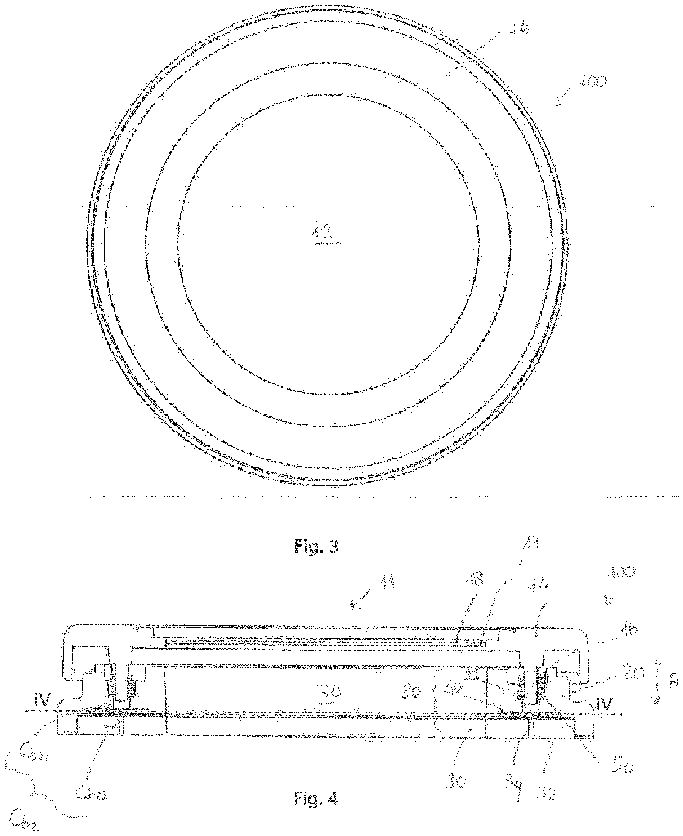

The button 100 according to the invention also comprises an activation member 10, which is movable by a user relative to the support member 20. The direction of the movement is illustrated by the arrow A in Fig. 4. In particular, the activation member10 in the clicked state is moved closer to the support member 20 than in the unclicked state.

The support member 20 is then configured to support the activation member 10 such that the activation member 10 can be moved towards the touch screen surface. The movement of the activation member 10 towards the touch screen surface provides the activation of the activation member 10.

Preferably, the support member 20 and the activation member 10 are two distinct pieces, wherein the activation member 10 can perform a translational movement in the direction A in the support member 20. Preferably, the activation member 10 is rigid and/or the movement of the activation member 10 is translational without a deformation of the activation member 10. However, it is also possible that the movement includes additionally also a deformation of the activation member 10, when the activation member 10 is at least partly flexible.

It is also possible that the support member 20 and the activation member 10 are made of one piece and the movement is realised by a deformation of the button 100 and/or of activation member 10. However, a rigid activation member 10 is preferred, because it provides a higher transparency for displaying the information of the touch screen area under the button 100 and is more robust than a flexible material like rubber.

The support member 20 has preferably a stepped cylindrical shape. In particular, the part of the support member 20 supposed to enter into contact with the touch sensor surface is a cylinder with a first diameter and the part of the support member opposite to the touch sensor surface is a cylinder with a second diameter smaller than the first diameter. The difference between the two diameters forms a recess 24. The movement of the activation member is performed along this recess 24, so that once the button is in the clicked state, the bottom peripheral surface of the activation member 10 enters into contact with the top peripheral surface of the support member 20.

In the embodiment illustrated in Figs. 1, 4 and 5, the activation member has a cylindrical shape, with a diameter substantially equal to the first diameter of the support member 20. In this embodiment, once the button is in the clicked state, the support member 20 is aligned and perfectly superposed to the activation member 10, thereby improving the ergonomics of the button 100.

The activation member 10 comprises a user contact surface 11 on the top (facing away from the touch screen surface) of the activation member 10. The user contact surface 11 is the portion of the activation member 10 which can be touched by a user in order to press the activation member 10 down (towards the touch screen surface). Therefore, the user contact surface 11 is configured to be touched by a user for moving the activation member 10, thereby actuating the button, by passing from the unclicked state to the clicked state.

The user contact surface can also be on the lateral side(s) of the button 100, thereby allowing the user to activate the button by a pressure or a touch on a lateral side of the button 100, i.e. a side of the button sensibly perpendicular to the touch screen surface, once the button is placed on the touch screen surface.

The user contact surface 11 is at least partially transparent so as to transfer information displayed on the touch sensor surface under the transparent user contact surface 11 to the user such that the user can see through the transparent user contact surface 11 what is displayed on the touch screen surface under (the transparent user contact surface of) the activation member 10.

The user contact surface 11 and/or the activation member 10 is at least partially made by an electrically conductive material.

In the illustrated embodiment, the user contact surface 11 comprises a transparent portion 12 and a non-transparent portion 14. Preferably, the transparent portion 12 is central and preferably made of a transparent (and rigid) material like glass or poly methyl methacrylate. Preferably, the non-transparent portion 14 has a ring shape and surrounds the transparent portion 12. It is preferably made of a non-transparent (and not necessarily rigid) material like a conductive polymer. It can also be made of metal.

Advantageously the activation member 10 of the button 100 according to the invention comprises a transparent conductive layer 18, visible e.g. in Figs. 4 and 5. In one preferred embodiment, it is capacitively connected to the user contact surface 11.

In this preferred embodiment, the transparent conductive layer 18 is insulated from the (complete) user contact surface 11 of the activation member 10, i.e. from the (complete) surface the user can contact to press the activation member 10 down, towards the touch sensor surface. The term "insulated" refers in herein to an electrically insulation in the sense that no galvanic or conductive connection exists.

In another embodiment (not shown), the transparent conductive layer 18 under the transparent user contact surface 11 could be conductively connected at a (small) portion of the user contact surface 11 to the latter. The conductive connection could be provided by at least one connection portion conductively connecting the user contact surface 11 and the transparent conductive layer 18. The connection portion is made off a different material than the transparent conductive layer 18. The different conductive material is preferably stable under contact with air. The different conductive material is preferably (semi-)transparent. The different conductive material is normally less transparent than the (material of the) transparent conductive layer 18.

Preferably, the transparent conductive layer 18 is encapsulated such that the material of the (thin) transparent conductive layer 18 is protected from physical damages and/or is not in contact with air or with the finger pressing on the user contact surface 11 of the activation member 10 and/or such that the material does not chemically react with the ambient air, in particular does not oxidize. This allows to use materials which combine a high transparency level with good conductivity, but would be damaged by contact of the human finger or air. For example transparent conducting oxide (TCO), in particular an indium tin oxide (ITO) have such properties but cannot be used on the surface of the activation member 10. Preferably, the material of the transparent conductive layer is a TCO, in particular ITO.

Preferably, the activation member 10 comprises preferably a top side (facing away from the touch screen surface) and a lower side (facing towards the touch screen surface). The top side and the lower side are preferably parallel (at least in the region of the transparent user contact surface) in order to provide a clear view on the display surface or touch screen surface below the transparent user contact surface. The transparent conductive layer 18 is preferably coated or deposited on the lower side of the activation member 10, as illustrated in Figs. 1 and 5.

The transparent conductive layer 18 is preferably encapsulated by a protective film or layer 19 coated, deposited or otherwise arranged on the transparent conductive layer 18. This protection layer 19 protects the transparent conductive layer 18 from contact with air and/or from physical damage. Preferably, the protective layer 18 is also transparent. The arrangement of the transparent conductive layer 18 on the lower side has the advantage that the transparent conductive layer 18 and the protective layer 19 are protected from the influence of the user.

The transparent conductive layer 18 could equally be deposited/coated/arranged on the top side of the activation member 10. The transparent conductive layer 222 on the top side is preferably encapsulated by a protective film or layer coated, deposited or otherwise arranged on the transparent conductive layer. However, the arrangement at the lower side (illustrated in Figs. 1 and 5) is preferred such that the transparent conductive layer 18 and/or the protective layer 19 cannot be damaged by the user. It could also be possible to arrange the transparent conductive layer inside the activation member. However, this embodiment is more complex for the manufacturing of the activation member 10.

In the embodiments of Figs. 1 to 6, the bottom side of the activation member 10 provides a cavity 70 formed under the user contact surface 11 and/or under the transparent conductive layer 18.

Preferably, the top and bottom side of the activation member 10 are parallel and/or the activation member 10 in the region of the user contact surface 11 has a constant thickness. This prevents a distortion of the display image displayed under the button 100 by the activation member 10.

The button 100, preferably the activation member 10, comprises switch means 80 configured to:
- conductively connect the transparent conductive layer 18 with the click detection portion 32, when the button 100 is in the clicked state,
- conductively separate the transparent conductive layer 18 from the click detection portion 32, when the button 100 is in the unclicked state, and
- provide an haptic click feedback and/or an acoustic click feedback, when the button 100 changes from the unclicked state to the clicked state and/or vice-versa.

A haptic click feedback means a change in the pressure necessary for moving the activation member 10 which indicates that the activation of the button was successful.

An acoustic click feedback means a sound which can be listened by a user when activating the activation member 10 to understand that the button 10 was activated/successfully pressed.

The switch means 80 allow the capacitive touch sensor to detect the (appearance of the) click detection portion 32 based on the sudden capacitance changed caused by closing the switch means 80 and conducting the charges from the finger to the click detection portion 32.

In one preferred embodiment, the switch means 80 comprise a dome-shaped spring 40 comprising a conductive portion. A dome-shaped spring 40 is a piece in the form of a dome. Preferably this dome-shaped spring 40 is connected to the transparent conductive layer 18 via a rod 16 of the activation member 10.

In the embodiment of Figs. 4 and 5, when the button is in the unclicked state, the rod 16 is separated from the dome-shaped spring 40, thereby forming a first parasitic capacitance C_{b21}, visible in Fig. 4. Once, the button is in the (non-illustrated) clicked state, the rod 16 slides on a recess 22, preferably a stepped recess, of the support member 20, so as to touch (i.e. galvanically contact) the dome-shaped spring 40, in particular its conductive portion.

Under the action of the rod 16, the dome-shaped spring 40 collapses, thereby providing a haptic click feedback and/or an acoustic click feedback to the user. Dome-shaped springs creates a haptic feeling/event and/or an acoustic event, once the dome-shaped spring collapses.

This collapsing of the dome-shaped spring 40 has another function: in fact, the collapsed dome-shaped spring 40 enters into contact with the click detection portion 32. In the examples of Figs. 4 and 5, the dome-shaped spring 40 is in fact placed on the upper surface of the PCB 30 (i.e. the surface of the PCB facing away from the touch sensor surface), in correspondence of conductive means, a conductive through hole (via) 34 of the PCB in the illustrated examples.

It must be noted that in the unclicked state, the dome-shaped spring 40 is separated from the conductive means 34, thereby forming a second parasitic capacitance C_{b22}, visible in Fig. 4. The second parasitic capacitance C_{b22} is in series with the first parasitic capacitance C_{b21}.

The action of the user on the button 100 moves the activation member 10 to the support member 20, so as to activate the dome-shaped spring 40. The activated dome-shaped spring 40 therefore allows a galvanic (or electrically conductive) connection of the transparent conductive layer 18 with the click detection portion 32, when the button is in the clicked state.

Therefore, the action of the user on the button creates an ohmic path in parallel to the series of the first and second parasitic capacitances C_{b21} and C_{b22}.

In another embodiment, not illustrated, when the button is in the unclicked state, the rod 16 is not separated from the dome-shaped spring 40, i.e. it contacts the dome-shaped spring 40. Therefore, there is no the first parasitic capacitance C_{b21}. It must be noted that in this embodiment, in the unclicked state, the dome-shaped spring 40 is separated from the conductive means 34, thereby providing the second parasitic capacitance C_{b22}. In this case, under the action of user, the dome-shaped spring 40 collapses and the collapsed dome-shaped spring 40 enters into contact with the click detection portion 32. Therefore, the action of the user on the button creates an ohmic path which in this case is in parallel to second parasitic capacitance C_{b22} only.

This embodiment in which there is a fixed conductive connection rod 16, conductively connected to the conductive portion of the dome-shaped spring, has the disadvantage that it could be more difficult to distinguish a touch of a user from a non-touch, with regard to the embodiment in which the rod 16 is a movable conductive connection rod, the support member comprising a recess 22, so that when the activation member is activated, the conductive connection rod moves in the recess 22 so as to contact in the clicked state the conductive portion of the dome-shaped spring.

In the embodiment of Figs. 4 and 5, the top end of the rod 16 ends in the actuation member 10. The bottom end of this rod 16 is connected to the (top surface of the) click detection point 15 via the dome-shaped spring 40 and the via 34.

A top view of the dome-shaped spring 40 is visible on Fig. 6. The illustrated dome-shaped spring 40 is star shaped (four-legged), as this allows to achieve a good haptic and/or acoustic effect. The dome-shaped spring 40 could however have other shapes, e.g. round shapes, triangle shapes (three-legged), etc.

The dome-shaped spring 40 comprises a (electrically) conductive portion 42, in correspondence of the via 34. In another embodiment, all the dome-shaped spring 40 is made of a conductive material, e.g. stainless steel. For quality purposes, the dome-shaped spring 40 can be plated with nickel, gold or silver to reduce contact resistance.

In general, the shape, the height and angles of the dome-shaped spring 40 are selected so as to achieve the wanted force, travel, tactile ratio, and/or force displacement.

The printed circuit board pads 32, which the domes rest on, are also a critical element for proper function of the dome-shaped spring 40. In one example, a hard nickel plating on the PCB pads 32 helps prevent wear, reduce contamination, and improve contact resistance over the life of the switch.

Although in the embodiment illustrated in Figs. 1 to 6, switch means comprises a dome-shaped spring 40 and although the dome-shaped spring 40 allows to perform in a simple and efficient way both the electrically conductive contact with the click detection portion 32 and the haptic and/or acoustic feedback, other switch means can be imagined by the skilled person in order to perform both functions. In one (not illustrated) example, switch means comprise a flat spring (without a dome) for performing the electrically conductive contact with the click detection portion 32, the haptic and/or acoustic feedback being obtained by applying an audio signal or a vibration, e.g. an ultrasonic vibration, to the button once it is in the clicked state. However, the button 100 in this embodiment will be more complicate and expensive.

Preferably, the button 100 and/or the switch means 80 comprises spring means, e.g. an helical spring 50 (visible on Figs. 4 and 5) around the movable conductive connection rod 16 for further improving the haptic click feedback. In fact the presence of the spring means 50 allows to prolong the path of the rod 16, thereby improving the haptic feeling of the user.

In one embodiment, the button 100 comprises several switch means 80 and several corresponding click detection portions 32. In the embodiment of Figs. 2 or 6, it comprises six switch means 80 and six corresponding click detection portions 32. In such embodiment, it is possible to alternate a switch means 80 comprising a spring means 50 with a switch means 80 devoid of a spring means 50, so as to better distribute the force over the button 100.

Fig. 12 shows an embodiment of arranging the dome-shaped spring 40. The dome-shaped spring 40 is arranged between the click detection portion 32 and the (bottom end of the) rod 16. Preferably the bottom end of the rod 16 is connected to the centre of the dome-shaped spring 40.

In one embodiment, if the user clicks, the activation member 10 and thus the rod 16 move against the force of the dome-shaped spring 40 towards the support member 10, until the dome-shaped spring 40 collapses. When the dome-shaped spring 40 collapses, it contacts a contact portion 36 connected with the click detection portion 32. In the example of Fig. 12, the contact portion 36 is connected with the click detection portion 32 by a via 34.

Otherwise, the rod 16 is not connected with the click detection portion 32. In this way, the switch means is always synchronized with the haptic and/or acoustic click event created when the dome-shaped spring 40 collapses. The support 30 of the dome-shaped spring 40 should be on a non-conductive material or more general a material not conductively connected to the detection portion 32.

In an advantageous embodiment, this support 30 can be realized by a printed circuit board (PCB) made out of an electrically insulating substrate. The PCB has on its top side (towards the dome-shaped spring) a contact portion 36 arranged under the centre of the dome-shaped spring 40. The PCB has on its bottom side (towards the touch sensor surface) the detection portion 32, which is conductively connected with the contact portion 36 by a conductive through hole (via).

Fixation means 60, visible e.g. on Figs. 2 and 6, allow to connect the PCB 30 to the button 100. In one preferred embodiment, they allow also a precise positioning of the PCB 30 with regard to the button 100, so that each switch means 80 is positioned over the corresponding click detection portion 32.

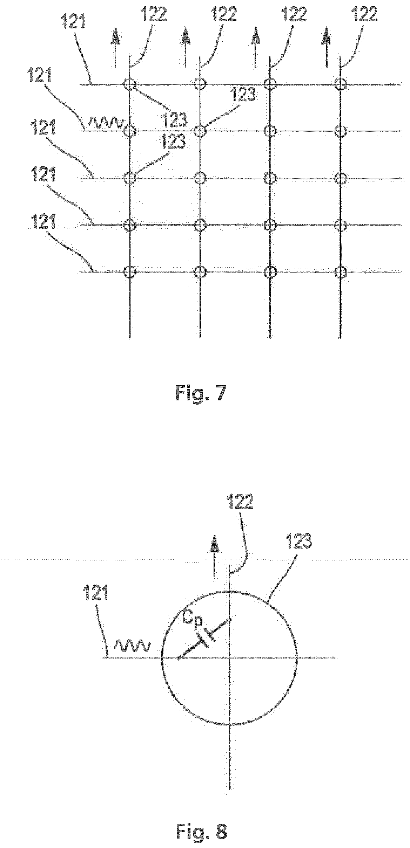

In one embodiment, the touch sensor 1 arranged to cooperate with the button 100 according to the invention comprises a plurality of touch pixels 123 (visible on Fig. 7) distributed over the touch screen surface. Each touch pixel 123 is configured to detect a capacitance from which a touch of an object at or around the touch pixel can be determined. Fig. 7 shows an embodiment for a touch sensor surface. The touch pixels 123 are preferably arranged in an array of first lines (in a first direction) and second lines (in a second direction, preferably perpendicular to the first direction). Each touch pixel 123 can be identified by the corresponding first and second line. The touch pixels 123 of each first line are connected by a first conductor 121 connecting serially all touch pixels 123 of the same first line. Consequently, each first line has a corresponding first conductor 121. The touch pixels 123 of each second line are connected by a second conductor 122 connecting serially all touch pixels 123 of the same second line. Consequently, each second line has a corresponding second conductor 122.

Each touch pixel 123 is formed by a capacitive connection between one of the first conductor 121 and one of the second conductor 122 as shown in Fig. 8. A touch or a contact of an object at a certain touch pixel 123 is detected by measuring a change in the capacitance value caused by the presence of the object.

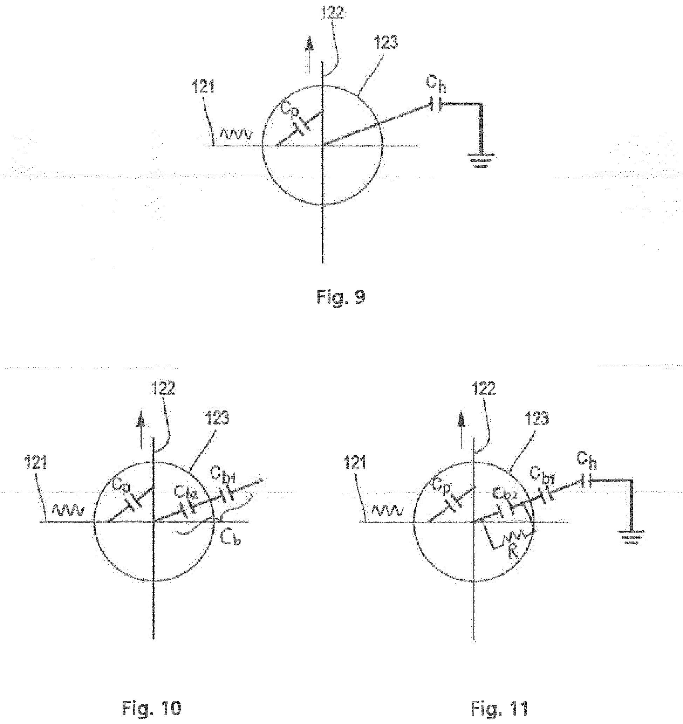

The measured capacitive changes for example in the presence of a human finger, because of the capacitive connection between the touch pixel 123 and earth with the capacitance Cₕ of the human as shown in Fig. 9. Other objects like metal objects can also be detected due to the presence of charges in the metal material. However, the detection quality without the connection to earth via the user is less good.

The touch sensor is configured to measure the capacitance at the touch pixels 123, the first lines and/or second lines sequentially, i.e. in subsequent distinct time windows of one sampling period. Once the capacitance is measured for all touch pixels, all first lines and/or all second lines, a touch frame of the measurements of all touch pixels within one sampling period is created to detect the presence and/or position of an object on the touch sensor surface.

Preferably, the touch sensor is configured for passively detecting positions of a passive object on the touch screen surface. In one embodiment, a passive detection can be achieved by applying a driving signal on the touch pixels of a first line or on the corresponding first conductor 121 and by measuring (sequentially or at the same time) the output of the second lines or the second conductors 122. The driving signal is applied sequentially to each (and/or only one) of the first lines/conductors 121 so that the output signal for each combination of first line and second line, thus for each touch pixel 123, can be measured. Based on the output signals for each touch pixel 123, the capacitance value of each touch pixel 123 of the touch sensor area 12 (and in the touch frame) can be measured. If the capacitance value of a touch pixel 123 goes over or under a certain threshold, a touch is detected at this touch pixel 123. Therefore, the touch sensor comprises preferably a driving circuit (not illustrated) for driving the first conductors 121 and a sensing circuit for measuring the output of the second conductors 122. The driving circuit is connected to the first lines for sequentially applying a driving signal at the first lines or conductors 121. The sensing circuit is connected to the second lines or conductors 122 for measuring for each driven first line or conductors 121 the output of all second lines or conductors 122. Preferably, the sensing circuit comprises at least one charge sensor and at least one digital to analogue converter.

In the following, the electrically function of the detection of the button 100 is described in more detail. The button 100 according to the invention comprises a transparent conductive layer 18, which is preferably capacitively connected to the user contact surface 11 This is illustrated by the capacitance C_{b1} in Fig. 10.

Once the button is in its unclicked state (Fig. 10), the capacitance of the button comprises also a parasitic capacitance between switch means and the detection portion (capacitance C_{b2} in Fig. 10). This second capacitance C_{b2} of the button 100 is in series with the first capacitance C_{b1} of the button 100, once the button is in its unclicked state.

As discussed, the second capacitance C_{b2} of the button 100 comprises one or two capacitances in series (Fig. 4), i.e. the second parasitic capacitance C_{b22} (due to the dome-shaped spring 40 and the click detection portion 32 in the unclicked state), and possibly the first parasitic capacitance C_{b21} (due to the distance between the rod 16 and the dome-shaped spring 40 in the unclicked state, only in the embodiment of a movable rod 16).

Once the button is in its unclicked state, one end of the capacitance of the button C_{b} is connected to the detection portion and then to the touch screen surface, and the other end is floating (Fig. 10).

Once the button is in its clicked state, the floating end of the capacitance of the button C_{b} is connected to the ground via the capacitance of the human finger Cₕ (which is in series with the first capacitance of the button).

Due to the presence of the transparent conductive layer, which in a preferred embodiment is thin, the charges of a human finger are connected over a large capacitance C_{b1} between the finger and the transparent conductive layer (first capacitance of the button) to the click detection portion and then to the touch screen surface. Therefore, it is possible to safely detect the human finger.

Moreover, the action of the user on the button moves the activation member 20 to the support member 10, so as to activate the switch means 80 of the button according to the invention. The activated switch means therefore allows a galvanic (or electrically conductive) connection of the transparent conductive layer 18 with the click detection portion, 32 when the button is in the clicked state.

Therefore, the action of the user on the button creates an ohmic path R (visible in Fig. 11) in parallel to the second capacitance of the button C_{b2}.

The charges of the human finger are then connected over a large capacitance C_{b1} (first capacitance of the button) between the human finger and the transparent conductive layer 18 and over this ohmic path R to the touch sensor surface.

Due to the fact that the first capacitance C_{b1} of the button 100 is large, the capacitance Cₕ of the human finger remains dominant and can be detected with a high detection quality at the touch screen.

Moreover, the switch means 80 of the button 100 according to the invention provide also a haptic click feedback and/or an acoustic click feedback, when the button changes from the unclicked state to the clicked state and/or vice-versa.

The present invention concerns also a system 1, visible e.g. on Fig. 13, comprising a capacitive touch sensor 202 and a button 100 according to the invention. The capacitive touch sensor comprises a touch sensor surface 14, wherein the button is placed with the support surface of the support member10 on the touch sensor surface 200. The touch sensor surface comprises a plurality of touch pixels 123 distributed over the touch sensor surface, wherein each touch pixel accessible to a user is configured to capacitively detect a finger of the user in the vicinity of the touch pixel 123, wherein at least one of the touch pixels arranged under the click detection portion 32 is configured to capacitively detect a touch of the finger of the user on the user contact surface, when the button 100 is in the clicked state and the user contact surface is conductively connected with the click detection portion.

In one embodiment, the system comprises a processing means (not illustrated) configured to detect the clicked state, when the click detection portion is detected in at least one of the touch pixels.

In one embodiment, the button 100 is mounted in a fixed manner on the touch sensor surface, e.g. glued on the touch sensor surface. In another embodiment, the support member 20 is fixed in a non-removably/non-detachably manner on the touch screen surface 200. Preferably, the support member 20 is glued (with the support surface) on the touch screen surface 200. In an alternative embodiment, the support member 20 can be fixed in a removably/detachably manner. This can be realised by simply placing the button 100 with the support surface on the touch screen surface 200 such that the support member 20 is fixed by the gravity and/or friction. This can be improved by a high friction surface on the support surface. This can also be realised by detachable fixation mechanisms like a suction surface on the support surface.

The button 100 is described in the above system as fixed to the capacitive touch sensor 2. The button 100 is however also protected without the capacitive touch sensor 2. The button 100 is then configured to be fixed to the (flat) touch screen surface 200 of the capacitive touch sensor 2.

### Reference signs used in the figures

- 1: System
- 10: Activation member
- 11: User contact surface
- 12: Transparent portion of the activation member
- 14: Non-transparent portion of the activation member
- 16: Rod
- 18: Transparent conductive layer
- 19: Protective film or layer
- 20: Support member
- 22: Recess for the rod 16
- 24: Recess for the activation member 10
- 30: Support surface / PCB
- 32: Click detection portion
- 34: Conductive through hole
- 36: Contact portion
- 40: Dome-shaped spring
- 42: Conductive portion of the
- 50: Helical spring
- 60: Fixation means
- 70: Cavity
- 80: Switch means
- 100: Button
- 121: First conductor
- 122: Second conductor
- 123: Touch pixel
- 200: Touch sensor surface
- 202: Capacitive touch sensor
- A: Direction of the movement of the activation member
- Cₚ: Pixel capacitance
- Cₕ: Human finger capacitance
- C_{b1}: First capacitance of the button
- C_{b2}: Second capacitance of the button
- C_{b}: Capacitance of the button
- C_{b21}: First parasitic capacitance
- C_{b22}: Second parasitic capacitance
- R: Resistance

## Claims

1. Button (100) configured to be placed on a touch sensor surface (200) of a capacitive touch sensor (202) and configured to allow the touch sensor to detect a clicked state and an unclicked state,
the button (100) comprising:
- a support member (20) comprising a support surface (30) configured to face the touch sensor surface (200), wherein the support surface comprises a click detection portion (32) allowing the detection of the clicked state of the button (100) in the touch sensor,
- an activation member (10) which is movable by a user relative to the support member (20), wherein the activation member (10) in the clicked state is moved closer to the support member (20) than in the unclicked state,
wherein the activation member (10) comprises:
- a user contact surface (11) which is configured to be touched by a user for moving the activation member (10), thereby actuating the button (100), the user contact surface being at least partially transparent so as to transfer information displayed on the touch sensor surface (200) under the user contact surface (11) to the user, and,
**characterized in that** it comprises:
- a transparent conductive layer (18), connected, preferably capacitively connected, to the user contact surface (11),
- switch means (80) configured to
- conductively connect the transparent conductive layer (18) with the click detection portion (32), when the button (100) is in the clicked state,
- conductively separate the transparent conductive layer (18) from the click detection portion (32), when the button (100) is in the unclicked state, and
- provide an haptic click feedback and/or an acoustic click feedback, when the button (100) changes from the unclicked state to the clicked state and/or vice-versa.

2. The button of claim 1, wherein the switch means (80) comprise a dome-shaped spring (40) comprising a conductive portion (42).

3. The button of claim 2, wherein the switch means (80) comprise a conductive means (34) between the conductive portion (42) of the dome-shaped spring (40) and the click detection portion (32), so that when the dome-shaped spring (40) is in a collapsed state, conductive portion (42) contacts the click detection portion (32) via the conductive means (42).

4. The button of one of claims 2 or 3, wherein the activation member (10) comprises a fixed conductive connection rod (16), the fixed conductive rod being conductively connected to the conductive portion (42) of the dome-shaped spring (40).

5. The button of one of claims 2 or 3, wherein the activation member (10) comprises a movable conductive connection rod (16), the support member (20) comprising a recess (22), so that when the activation member (10) is activated, the movable conductive connection rod (16) moves in the recess (22) so as to contact in the clicked state the conductive portion (42) of the dome-shaped spring (40).

6. The button of claim 5, comprising spring means (50) around the movable conductive connection rod (16) for further improving the haptic click feedback.

7. The button of one of claims 1 to 6, a material of the transparent conductive layer (18) being encapsulated for not coming in contact with ambient air or with the user.

8. The button of one of claims 1 to 7, wherein the material of the transparent conductive layer (18) is a transparent conducting oxide, in particular of an indium tin oxide.

9. The button of one of claims 1 to 8, wherein the user contact surface (11) is insulated from the transparent conductive layer (18) such that charges of a user contacting the user contact surface (11) are not electrically conducted to the transparent conductive layer (18), and/or such that a capacitance (C_{b1}) is created between a user contacting the user contact surface and the transparent conductive layer (18).

10. The button of one of claims 1 to 9, wherein the activation member (20) comprises a bottom surface facing towards the touch sensor surface (200) and a top surface being opposite to the bottom surface, wherein the transparent conductive layer (18) is arranged on the bottom surface covered by a protective layer (19).

11. The button of one of claims 1 to 10, wherein the button (100) comprises a cavity (70) under the user contact surface (11) and/or under the transparent conductive layer (18).

12. The button of one of claims 1 to 11, wherein the activation member (10) is rigid and the button (100) is configured to allow a translational movement of the activation member (10) with regard to the support member (20) towards the touch sensor surface (200).

13. The button of one of claims 3 to 12, the support member comprising a PCB (30), the PCB (30) comprising the click detection portion (32) and the conductive means (34), the conductive means being preferably a via of the PCB (30).

14. The button of one of claims 1 to 13, the activation member (10) comprising a lens for magnifying the size of the information displayed on the touch sensor surface (200) under the transparent user contact surface (11) to the user, said lens being preferably a convex lens.

15. System (1) comprising a capacitive touch sensor (202) and a button (100) according to one of the previous claims,
wherein the capacitive touch sensor (202) comprises a touch sensor surface (200), wherein the button (100) is placed with the support surface of the support member (20) on the touch sensor surface (200),
wherein the touch sensor surface comprises a plurality of touch pixels (123) distributed over the touch sensor surface (200) wherein each touch pixel (123) accessible to a user is configured to capacitively detect a finger of the user in the vicinity of the touch pixel (123),
wherein at least one of the touch pixels (123) which arranged under the click detection portion (32) is configured to capacitively detect a touch of the finger of the user on the user contact surface (11), when the button (100) is in the clicked state.
